(19) Europäisches Patentamt

European Patent Office

Office européen des brevets

(11) **EP 1 028 311 A1**

(12) **EUROPEAN PATENT APPLICATION**

(43) Date of publication:
**16.08.2000 Bulletin 2000/33**

(51) Int. Cl.[7]: **G01J 9/02**

(21) Application number: **00102788.7**

(22) Date of filing: **10.02.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **12.02.1999 JP 3469799**

(71) Applicant:
**ANDO ELECTRIC CO., LTD.**
**Tokyo 144 (JP)**

(72) Inventor:
**Maeda, Minoru,**
**c/o Ando Electric Co., Ltd.**
**Tokyo (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Apparatus for measuring wavelength changes and wavelength tunable light source**

(57) An apparatus for measuring wavelength changes that occur in a wavelength tunable light source includes a lens 12 with which incident light from an input section 11 is converted to collimated light, a beam-splitter 13 into which the collimated light from the lens 12 is launched to be split into two beams, a first reflector 14 for reflecting the first split beam of collimated light, a second reflector 15 for reflecting the second split beam of collimated light and which has a step that creates an optical pathlength difference of $\lambda/8$, a reflective prism 16 with which the two beams of collimated light that have been reflected from the first and second reflectors 14 and 15 and which have been recombined by the beam-splitter 13 are again split into two beams, a first photo-detector 17 and a second photo-detector 18 for receiving the light that has been split into two beams by the reflective prism 16, and a signal processing means 20 which counts the change in optical intensity from the first and second photo-detectors 17 and 18 and outputs the amount of change in the wavelength of the incident light as count data.

*FIG. 1*

Printed by Xerox (UK) Business Services
2.16.7 (HRS)/3.6

**Description**

1. Background of the Invention

The present invention relates to an apparatus for measuring wavelength changes that typically occur in wavelength tunable light sources used in optical instrumentation technology. The invention also relates to a wavelength tunable light source that is controlled in wavelength using the apparatus.

2. Description of the Related Art

A problem that has recently become a concern with a light source for DFB-LD (distributed feedback laser diode) which oscillates on a single mode and one for DBR-LD (distributed Bragg reflector laser diode) is that the oscillating wavelength drifts during long-term operation. It is therefore necessary for a high-density WDM (wavelength-division multiplexing) system to make occasional measurement of the oscillating wavelength of the light source and control it.

A recently commercialized external cavity type wavelength tunable light source using a diffraction grating is extensively used to measure the wavelength characteristics of optical components. This type of light source is capable of wavelength setting at a desired value in a broad wavelength band ($\geq 100$ 100 nm) but, on the other hand, it is susceptible to external conditions, notably, the oscillating wavelength changes with the temperature change.

In addition, the increasing precision of a high-density WDM system has made it necessary to increase the accuracy in the wavelength of light issued from the wavelength tunable light source.

In order to measure the oscillating wavelength of a light source, an apparatus for wavelength measurement is necessary and two conventional approaches are available for measuring the oscillating wavelengths of light sources; one is an apparatus for measuring optical spectrum using a diffraction grating and the other is an apparatus for wavelength measurement using a Michelson interferometer.

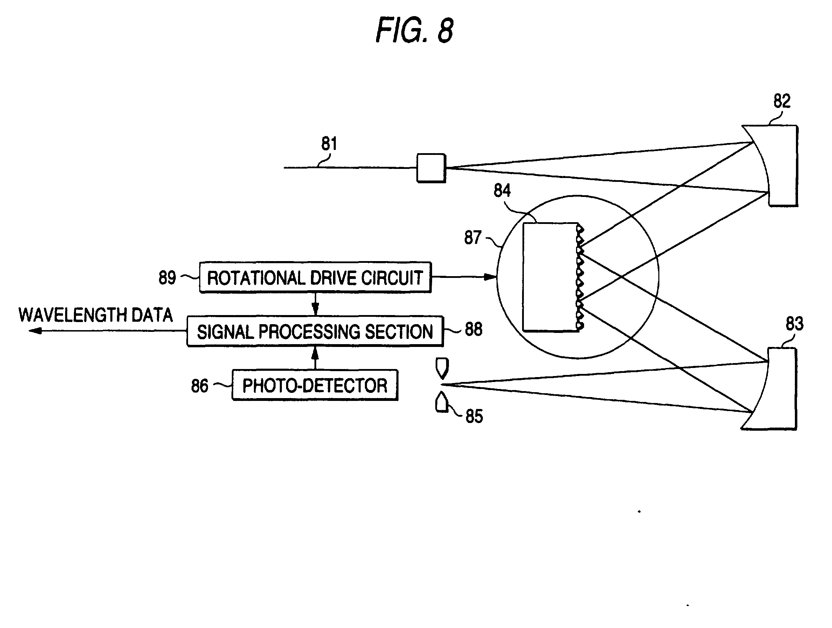

Fig. 8 shows the composition of an apparatus for measuring optical spectrum that uses a diffraction grating and which is the most common conventional technology.

The apparatus generally comprises an input fiber 81 as an optical input section, concave mirrors 82 and 83, a diffraction grating 84, a slit plate 85, a photo-detector 86, a rotating mechanism 87, a signal processing section 88 and a rotational drive circuit 89.

The input fiber 81 admits the light to be measured that issues from a light source (not shown) and the first concave mirror 82 collimates the light emerging from the input fiber 81 and reflects the collimated light to be incident on the diffraction grating 84.

The diffraction grating 84, which is mounted on the rotating mechanism 87 that rotates in response to a signal from the rotational drive circuit 89, is capable of adjusting or the incident angle $\theta$ of the collimated light. The diffraction grating 84 is an optical element with which a component of the incident light having the wavelength $\lambda$ as expressed by the following equation (1) is reflected at an angle of $\beta$:

$$\lambda = dl/m \cdot (\sin \theta + \sin \beta) \qquad (1)$$

where $\lambda$ is the wavelength of the incident light, dl is the spacing between grooves in the diffraction grating, and m is the diffraction order of the diffraction grating 84.

Thus, the collimated light incident on the diffraction grating 84 is wavelength selected by the incident angle $\theta$ and the reflection angle $\beta$ in equation (1) and reflected toward the second concave mirror 83.

The collimated light reflected by the diffraction grating 84 is focused by the second concave mirror 83 so that it is focused in the slit 85. The light passing through the slit 85 is received by the photo-detector 86, which supplies the signal processing section 88 with an electrical signal in proportion to the intensity of the received light wavelength. The signal processing section 88 determines the wavelength of the light of interest on the basis of both the optical signal from the photo-detector 86 which is dependent on the wavelength selected by the diffraction grating 84 and the wavelength signal from the rotational drive circuit 89.

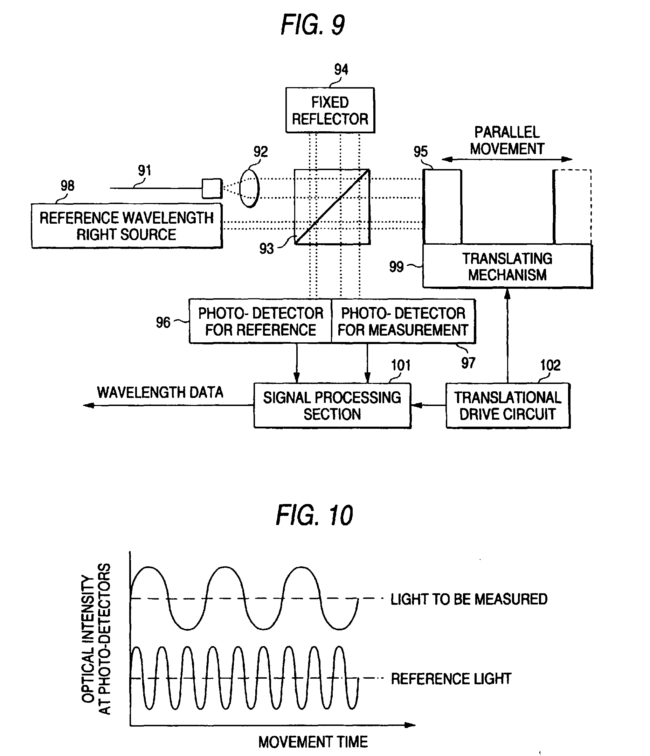

Fig. 9 shows the composition of another conventional apparatus for wavelength measurement that uses a Michelson interferometer.

The apparatus generally comprises an input fiber 91 as an optical input section, a lens 92 as an optical system for converting exit light into collimated light, a beam-splitter 93, reflectors 94 and 95, photo-detectors 96 and 97, a light source 98 emitting at a reference wavelength, a translating mechanism 99, a signal processing circuit 101, and a translational drive circuit 102. The light from the light source 98 emitting at the reference wavelength is received by the photo-detector 96. On the basis of the period of light intensity from the photo-detector 96, Fourier transform is performed on the interference waveform measured by the photo-detector 97 receiving the light of interest, whereupon its wavelength is measured.

Fig. 10 is a characteristic diagram representing the relationship between the time of movement and the intensity of light received by the two photo-detectors.

The above-described two conventional apparatus for wavelength measurement, one using a diffraction grating to measure optical spectrum and the other using a Michelson interferometer to measure wavelengths, have the advantage of a broad wavelength range that can be measured. However, the mechanical moving part they use reduces their long-term reliability. Since this mechanical part must be moved for wavelength measurement, high-speed wavelength measurement is difficult to achieve and real-time measurement is practically impossible. What is more, in order to improve the wavelength resolution, the size of the optical system has to be large, making it difficult to reduce the overall size of the equipment.

Under the circumstances, a new apparatus for measuring optical spectrum has recently been developed that uses a diffraction grating and a photo diode array but which has no mechanical moving part.

This apparatus generally comprises an input fiber as a optical input section, a concave diffraction grating that collimates the exit light and which performs wavelength separation on the basis of its wavelength dispersion characteristics, a photo diode array and a signal processing circuit. The apparatus differs from the one shown in Fig. 8 in that the diffraction grating need not be driven to rotate. Light incident on the grating is focused on the photo diode array in different positions in accordance with wavelength. The wavelength separated light that is focused on each photo-detecting element in the array is converted to an electrical signal in accordance with optical intensity. The photo diode array sends wavelength-dependent optical signals to the signal processing section, which performs the necessary signal processing to determine the wavelength of the light of interest and its spectrum.

Having no mechanical moving part, the above-described apparatus using a photo diode array features high reliability and can be designed as a compact system. On the other hand, the number of photo-detecting elements used in the array is not large enough to provide high resolution in wavelength.

Another apparatus that has been developed to control the wavelength of a light source is a "wavelength locker". This apparatus measures wavelength variations using a wavelength spectrometer such as a filter using an interference film or a diffraction grating. Having no mechanical moving part, the wavelength locker features high reliability and can be designed as a compact system; it is therefore suitable for controlling the oscillating wavelength of light sources such as one for DBF-LD that need be tuned over a narrow range of wavelengths. However, the wavelength range that can be measured with the wavelength locker is limited by the wavelength characteristics of the filter and grating and it cannot be used to measure and control the wavelength of wavelength tunable light sources of an external cavity type and other versions that permit tuning over a broad range of wavelengths.

As described above, the apparatus for measuring optical spectrum using a diffraction grating and the apparatus for wavelength measurement using a Michelson interferometer have the advantage of permitting measurement over a broad range of wavelengths but, on the other hand, they have a mechanical moving part that lowers their long-term reliability. Since this mechanical part must be moved for wavelength measurement, high-speed wavelength measurement is difficult to achieve and real-time measurement is practically impossible. What is more, in order to improve the wavelength resolution, the size of the optical system has to be increased, making it difficult to reduce the overall size of the equipment.

The apparatus for wavelength measurement that uses a photo diode array has no mechanical moving part, so it features high reliability and can be designed as a compact system. On the other hand, the number of photo-detecting elements used in the array is not large enough to provide high resolution in wavelength.

Speaking of the apparatus for wavelength measurement that is called a wavelength locker, the wavelength range that can be measured is limited by the wavelength characteristics of the wavelength spectrometer used (i.e., filter and diffraction grating) and it cannot be used to measure and control the wavelength of external cavity type wavelength tunable light sources and other versions that permit tuning over a broad wavelength range.

## SUMMARY OF THE INVENTION

An object, therefore, of the present invention is to provide an apparatus for measuring wavelength changes that occur in a wavelength tunable light source capable of mode hop free tuning over a broad wavelength range, said apparatus being characterized by having no mechanical moving part, being compact in size and permitting real-time measurement of wavelength changes.

To achieve the above object, according to a first aspect of the invention, there is provided an apparatus for measuring a change in wavelengt using Michelson interferometer optical system, said optical system comprising:

an optical element with which incident light from an input section is converted to collimated light;
a beam-splitter into which the collimated light from the optical element is launched to be split into a first beam of collimated light and a second beam of collimated light;
a first reflector and a second reflector for reflecting the first and second beams of collimated light from the beam-splitter;
an optical means which, when the second beam of collimated light moves back and forth once, creates an optical pathlength difference of $\lambda/4$ in one half the optical beam plane;
a reflective prism with which the two beams of collimated light that have been reflected from the first and second reflectors and which have been recombined by the beam-splitter are again split into two beams in the plane of the optical axis where the optical pathlength difference of $\lambda/4$ has occurred;

a first and a second photo-detector for receiving the light that has been split into two beams by the reflective prism; and

a signal processing means by which the change in optical intensity from the first and second photo-detectors is counted and subjected to specified processing.

Thus, the first aspect of the invention relates to an apparatus for measuring wavelength changes using a Michelson interferometer; when the second beam of collimated light produced by splitting with the beam-splitter moves back and forth once, the optical means creates an optical pathlength difference of $\lambda/4$ in one half the optical beam plane; the two beams of collimated light that have been reflected from the first and second reflectors and which have been recombined by the beam-splitter are again split with the reflective prism into two beams in the plane of the optical axis where the optical pathlength difference of $\lambda/4$ has occurred; the two split beams are received by the first and second photo-detectors; and the change in optical intensity from the first and second photo-detectors is counted and subjected to specified processing by the signal processing means. This is how the changes that actually occur to the wavelength of a wavelength tunable light source are measured and, hence, wavelength can be controlled with high precision.

In the signal processing means, a counter reads signals in high-speed period and this enables real-time measurement of wavelength changes. As a further advantage, there is no mechanical part that need be moved and, hence, deterioration is least likely to occur over time and high reliability is assured.

A second aspect of the invention is a modification of the apparatus according to the first aspect of the invention, wherein a planar second reflector having a step of $\lambda/8$ at the center of the optical axis where the collimated light is incident is used as said optical means.

Thus, in the second aspect of the invention, a planar second reflector having a step of $\lambda/8$ at the center of the optical axis where the collimated light is incident is used as the optical means which, when the second beam of collimated light produced by splitting with the beam-splitter moves back and forth once, creates an optical pathlength difference of $\lambda/4$ in one half the optical beam plane. Since the second reflector substitutes for the optical means, there is no need to provide an additional component as the optical means, contributing to avoid the increase in the number of components and complication of the assembling step.

A third aspect of the invention is also a modification of the apparatus according to the first aspect of the invention, wherein said optical means comprises:

a planar second reflector; and
a parallel plane substrate that is inserted between the beam-splitter and the second reflector and which has a step that produces an optical pathlength difference of $\lambda/8$ at the center of the optical axis where the collimated light is incident.

Thus, in the third aspect of the invention, the optical means which, when the second beam of collimated light produced by splitting with the beam-splitter moves back and forth once, creates an optical pathlength difference of $\lambda/4$ in one half the optical beam plane comprises a planar second reflector that reflects the second beam of collimated light obtained by splitting with the beam-splitter and a parallel plane substrate that is inserted between the beam-splitter and the second reflector and which has a step that produces an optical pathlength difference of $\lambda/8$ at the center of the optical axis where the collimated light is incident. This embodiment has the advantage of eliminating the need to use different types of reflector, thus permitting the use of two reflectors of identical type.

To measure different wavelength bands, one only need provide parallel plane substrates having different levels of step and the other optical components may remain the same.

A fourth aspect of the invention is another modification of the apparatus according to the first aspect of the invention, wherein said optical means comprises:

a cube beam-splitter having a step that provides an optical pathlength difference of $\lambda/8$ at the center of the optical axis of the exit plane from which the second beam of collimated light from the beam-splitter emerges; and
a planar second reflector.

Thus, in the fourth aspect of the invention, the optical means which, when the second beam of collimated light produced by splitting with the beam-splitter moves back and forth once, creates an optical pathlength difference of $\lambda/4$ in one half the optical beam plane comprises a cube beam-splitter having a step that provides an optical pathlength difference of $\lambda/8$ at the center of the optical axis of the exit plane from which the second beam of collimated light from the beam-splitter emerges and a planar second reflector that reflects the second beam of collimated light obtained by splitting with the beam-splitter. This embodiment also has the advantage of eliminating the need to use different types of reflector, thus permitting the use of two reflectors of identical type.

A fifth aspect of the invention is yet another modification of the apparatus according to the first aspect of the invention, wherein said optical means comprises:

a cube beam-splitter having a step that provides an optical pathlength difference of $\lambda/8$ at the center of the optical axis of the plane of the beam-splitter in which the second beam of collimated light has been split, with a reflective coat being applied to the stepped surface.

Thus, in the fifth aspect of the invention, a cube beam-splitter having a step that provides an optical pathlength difference of $\lambda/8$ at the center of the optical axis of the plane of the beam-splitter in which the second beam of collimated light has been split, with a reflective coat being applied to the stepped surface, is used as the optical means which, when the second beam of collimated light produced by splitting with the beam-splitter moves back and forth once, creates an optical pathlength difference of $\lambda/4$ in one half the optical beam plane. Since the beam-splitter also serves as the second reflector, only one reflector need be used and both cost reduction and simplified assembling step can be realized.

A sixth aspect of the invention is a modification of the apparatus according to any one of the first to fifth aspects of the invention, wherein said first reflector comprises:

a lens for condensing collimated light; and an optical fiber into which the focused light is launched and which has a reflective coat applied to the end face opposite the entrance face.

Thus, in the sixth aspect of the invention, the first reflector which reflects the first beam of collimated light produced by splitting with the beam-splitter comprises a lens for condensing collimated light and an optical fiber into which the focused light is launched and which has a reflective coat applied to the end face opposite the entrance face. In this embodiment, the difference between the optical pathlength of the first split beam and that of the second split beam can be increased fairly easily and FSR (free spectral region) is sufficiently reduced to increase the sensitivity for wavelength changes.

A seventh aspect of the invention is also a modification of the apparatus according to any one of the aspects 1 to 5 of the invention, wherein said first reflector is a corner cube prism.

Thus, in the seventh aspect of the invention, a corner cube prism is used as the first reflector which reflects the first beam of collimated light produced by splitting with the beam-splitter. Since the first reflector needs no angular adjustments, the assembling step can be simplified.

An eighth aspect of the invention provides a wavelength tunable light source having a wavelength tuning mechanism, which has the wavelength controlled on the basis of the wavelength changes measured by the apparatus according to any one of the first to seventh aspects of the invention.

Thus, in the eighth aspect of the invention, the wavelength changes that actually occur in a wavelength tunable light source are measured with the apparatus according to any one of the first to seventh aspects of the invention and this enables precise control of the wavelength of the light source.

## BRIEF DESCRIPTION OF THE INVENTION

Fig. 1 is a schematic diagram of an apparatus for measuring wavelength changes according to the first embodiment of the invention;
Fig. 2A is a characteristic graph describing the changes in the outputs of the first and second photo-detectors as a function of wavelength;
Fig. 2B is a characteristic graph describing the outputs of comparators as a function of wavelength;
Fig. 3 is a schematic diagram of an apparatus for measuring wavelength changes according to the second embodiment of the invention;
Fig. 4 is a schematic diagram of an apparatus for measuring wavelength changes according to the third embodiment of the invention;
Fig. 5 is a schematic diagram of an apparatus for measuring wavelength changes according to the fourth embodiment of the invention;
Fig. 6 is a schematic diagram of an apparatus for measuring wavelength changes according to the fifth embodiment of the invention;
Fig. 7 shows the composition of a wavelength tunable light source using an apparatus for measuring wavelength changes according to the seventh embodiment of the invention;
Fig. 8 shows the composition of a conventional apparatus for measuring optical spectrum using a rotating diffraction grating;
Fig. 9 shows the composition of another conventional apparatus for wavelength measurement using a Michelson interferometer; and
Fig. 10 is a characteristic diagram representing the relationship between the time of movement and the intensity of light detected by two photo-detectors in the apparatus shown in Fig. 9.

## DETAILED DESCRIPTION OF THE PREFERRED EMBODIMENTS

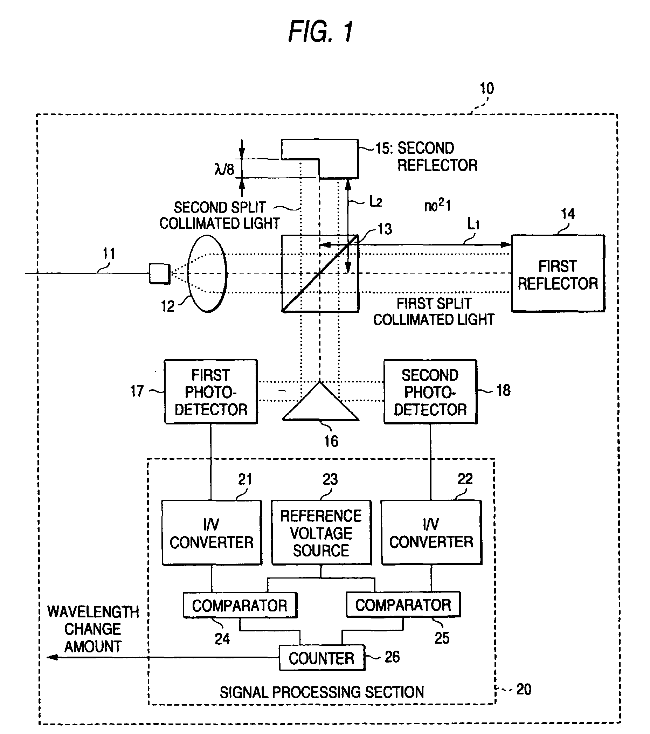

On the pages that follow, various embodiments of the apparatus for measuring wavelength changes and the wavelength tunable light source according to the present invention are described on the basis of Figs. 1 - 7.

〈First embodiment〉

Fig. 1 is a schematic diagram of an apparatus for measuring wavelength changes according to the first embodiment of the invention. As shown, the apparatus generally indicated by 10 comprises an input fiber (optical input section) 11, a collimating lens (optical element) 12, a beam-splitter 13, a first reflector 14, a second reflector 15, a reflective prism 16, a first photo-detector 17 and a second photo-detector 18; these components are fixed on an optical base (not shown). The apparatus 10 also has a signal processing section (means) 20 for processing signals from the first photo-detector 17 and the second photo-detector 18.

The input fiber 11 guides light from a wavelength tunable light source (not shown) so that it exits from the other end face of the fiber.

The lens 12 which is positioned on the optical axis of the light exiting from the input fiber 11 converts said light into collimated light, which is then launched into the beam-splitter 13 which is also positioned on the optical axis of the exit light.

The beam-splitter 13 splits the incident collimated light into two beams that are respectively directed toward the first reflector 14 and the second reflector 15. The first reflector 14 is positioned normal to the optical path of the first beam of collimated light produced by splitting with the beam-splitter 13 and it reflects the incident first beam of collimated light such that it is launched again into the beam-splitter 13. The second reflector 15 is positioned normal to the optical path of the second beam of collimated light also produced by splitting with the beam-splitter 13 and it reflects the incident second beam of collimated light such that it is launched again into the beam-splitter 13. The second reflector 15 is a planar type having a step d of $\lambda/8$ at the center of the optical axis where the second beam of collimated light is incident.

As the second beam of collimated light is reflected by the second reflector 15 to travel in the return path (i.e., it moves back and forth once), an optical pathlength difference of $\lambda/4$ is created in one half the plane of the light beam.

The two beams of collimated light that have been reflected by the first reflector 14 and the second reflector 15 are launched again into the beam-splitter 13, where they are recombined and the resulting single beam is incident on the reflective prism 16. The reflective prism 16 is positioned such that the plane of the optical axis where the recombined collimated light is incident and which has the optical pathlength difference created by the second reflector 15 coincides with the edge face of the prism.

The collimated light incident on the reflective prism 16 is split by its edge face into two beams which are launched into the first photo-detector 17 and the second photo-detector 18 that are positioned on the optical axes of said beams. In the illustrated case, collimated light is directly launched into the photo-detectors 17 and 18 but it should be apparent to the skilled artisan that collimated light may be focused with lenses (not shown) before it is received by the photo-detectors 17 and 18.

The first and second photo-detectors 17 and 18 are typically made of photodiodes which convert the split beams from the reflective prism 16 into electrical signals and output currents proportional to the optical intensities of the beams.

The change in optical intensity vs wavelength which occurs in a Michelson interferometer is expressed by the following equation (2):

$$I = [1 + \cos[4\pi(nL1 - nL2)/\lambda]]/2 \qquad (2)$$

where I is normalized light intensity received by a photo-detector; $\lambda$ is the wavelength of incident light from a light source; n is refractive index; L1 is the distance from the center of the beam-splitter in the Michelson interferometer to the first reflector 14; and L2 is the distance from the same center to the second reflector 15.

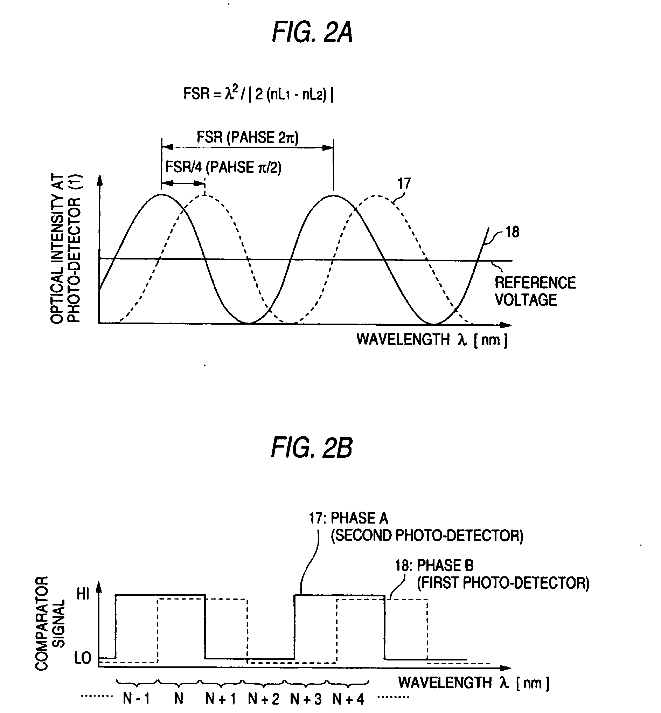

Figs. 2A and 2B show the changes in optical intensity as a function of the wavelength of light launched into the first photo-detector 17 and the second photo-detector 18. As already mentioned, the second reflector 15 has a step creating an optical pathlength difference of $\lambda/8$, so there are two distances from the beam-splitter 13 to the second reflector 15 and they are L2 and L2 + $\lambda/8$. As a result, the optical intensity I undergoes a phase shift of $\pi/2$ between two planes on opposite sides of the step creating an optical pathlength difference of $\pi/8$ and, hence, the output of the first photo-detector 17 has a phase shift of $\pi/2$ from the output of the second photo-detector 18 (see Fig. 2A).

The period of changes in optical intensity is also called free spectral region (FSR) and expressed by the following equation (3):

$$FSR = \lambda^2/[2(nL1 - nL2)] \qquad (3)$$

By increasing the optical pathlength difference (L1 - L2), FSR is shortened and the sensitivity for wavelength changes is increased. For instance, an optical pathlength difference of 10 mm gives an FSR of about 120 pm and an optical pathlength difference of 0.1 m gives an FSR of about 12 pm.

The signal processing section 20 generally comprises a first I/V converter 21 by which the output current from the first photo-detector 17 that is proportional to optical intensity is converted to voltage, a second I/V converter 22 by which the output current from the second photo-detector 18 that is also proportional to optical intensity is converted to voltage, a reference voltage source 23, a first comparator 24, a second comparator 25, and a counter 26.

I/V converters 21 and 22 perform I/V conversion on the currents from the photo-detectors 17 and 18 that are proportional to optical intensity and deliver the output voltages.

Comparator 24 (or 25) compares the voltage output from I/V converter 21 (or 22) with the voltage of reference voltage source 23 and produces a rectangular (Hi/Lo) output.

Counter 26 counts and compares the states of two phases of the rectangular output signals from the comparators 24 and 25 and outputs the result as count data. If counting is done by quadrupling, data is obtained that has a wavelength resolution equal to a quarter of FSR.

Transforming the outputs of I/V converters 21 and 22 to those of comparators 24 and 25 is not the sole operation of the signal processing section 20 and optical intensity may also be measured with an A/D converter (not shown) to output wavelength data of even higher resolution.

As a result of the above-described steps, the apparatus 10 can output the quantitative changes in the wavelength of incident light as count data obtained by the counter.

According to the first embodiment described above, the counter 26 reads signals in high-speed period and this enables real-time measurement of wavelength changes. As a further advantage, there is no mechanical part that need be moved and, hence, deterioration is least likely to occur over time and high reliability is assured.

〈Second Embodiment〉

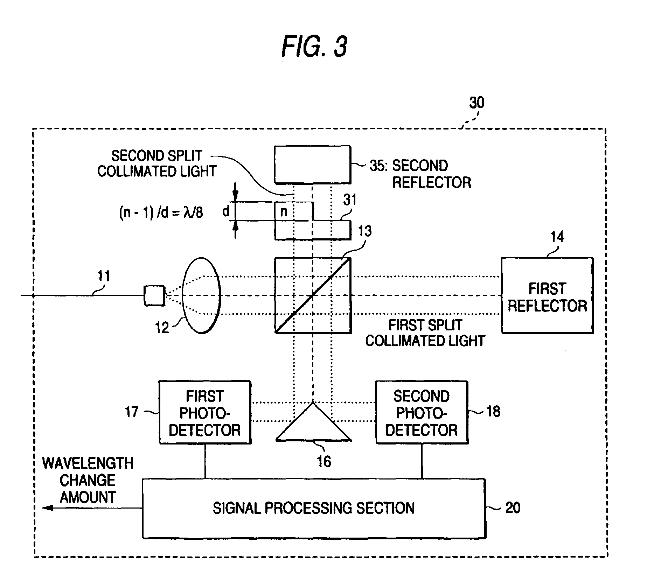

Fig. 3 is a schematic diagram of an apparatus for measuring wavelength changes according to the second embodiment of the invention. The components which are the same as those shown in Fig. 1 are identified by like numerals and are not described in detail.

In the apparatus 30 according to the second embodiment of the invention, the optical means which, when the second beam of collimated light produced by splitting with the beam-splitter 13 moves back and forth once, creates an optical pathlength difference of λ/4 in one half the optical beam plane comprises a planar second reflector 35 and a parallel plane substrate 31 that is inserted between the beam-splitter 13 and the second reflector 35 and which has a step d that produces an optical pathlength difference of λ/8 at the center of the optical axis where the collimated light is incident.

In the second embodiment, the optical pathlength difference of λ/8 is expressed by (n - 1)d, where n is the refractive index of the parallel plane substrate 31 and d is the physical level (height) of the step.

The second embodiment has the advantage of eliminating the need to use different type reflectors, thus permitting the use of two reflectors 14 and 35 of identical type. To measure different wavelength bands, one only need provide parallel plane substrates 31 having different levels of step and the other optical components may remain the same.

〈Third Embodiment〉

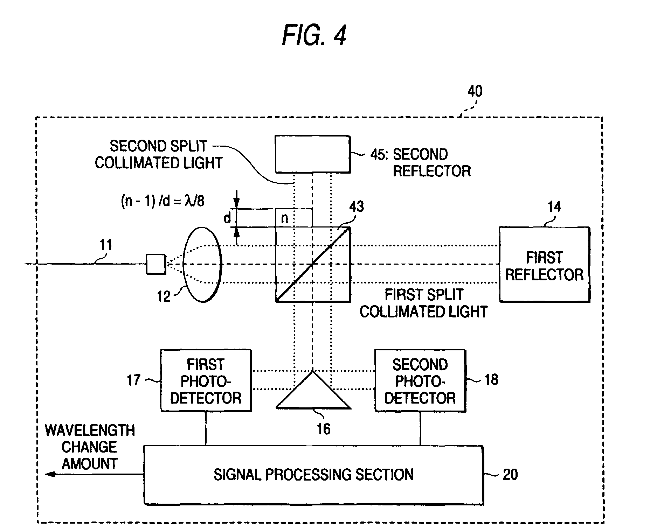

Fig. 4 is a schematic diagram of an apparatus for measuring wavelength changes according to the third embodiment of the invention. The components which are the same as those shown in Fig. 1 are identified by like numerals and are not described in detail.

In the apparatus 40 according to the third embodiment of the invention, the optical means which, when the second beam of collimated light moves back and forth once, creates an optical pathlength difference of λ/4 in one half the optical beam plane comprises a cube beam-splitter 43 having a step that provides an optical pathlength difference of λ/8 at the center of the optical axis of the exit plane from which the second beam of collimated light from the beam-splitter emerges and which has an antireflection coat over the entire surface, and a planar second reflector 45.

In the third embodiment, the optical pathlength difference of λ/8 is expressed by (n - 1)d, where n is the refractive index of the cube beam-splitter 43 and d is the physical level (height) of the step.

The third embodiment also has the advantage of eliminating the need to use different type reflectors, thus permitting the use of two reflectors 14 and 45 of identical type.

〈Fourth Embodiment〉

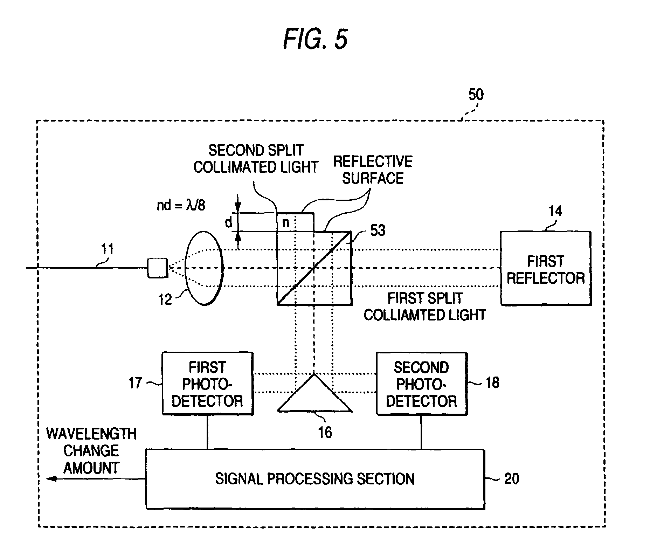

Fig. 5 is a schematic diagram of an apparatus for measuring wavelength changes according to the fourth embodiment of the invention. The components which are the same as those shown in Fig. 1 are identified by like numerals and are not described in detail.

In the apparatus 50 according to the fourth embodiment of the invention, the optical means which, when the second beam of collimated light moves back and forth once, creates an optical pathlength difference of λ/4 in one half the optical beam plane comprises a cube beam-splitter 53 having a step that provides an optical pathlength difference of λ/8 at the center of the optical axis of the plane of the beam-splitter in which the second beam of collimated light has been split, with a reflective coat being applied to the stepped surface and an antireflection coat to the other three surfaces.

In the fourth embodiment, the optical pathlength difference of λ/8 is expressed by nd, where n is the refractive index of the cube beam-splitter 53 and d is the physical level (height) of the step.

Since the beam-splitter 53 also serves as the second reflector in the fourth embodiment, only one reflector need be used and both cost reduction and simplified assembling step can be realized.

〈Fifth Embodiment〉

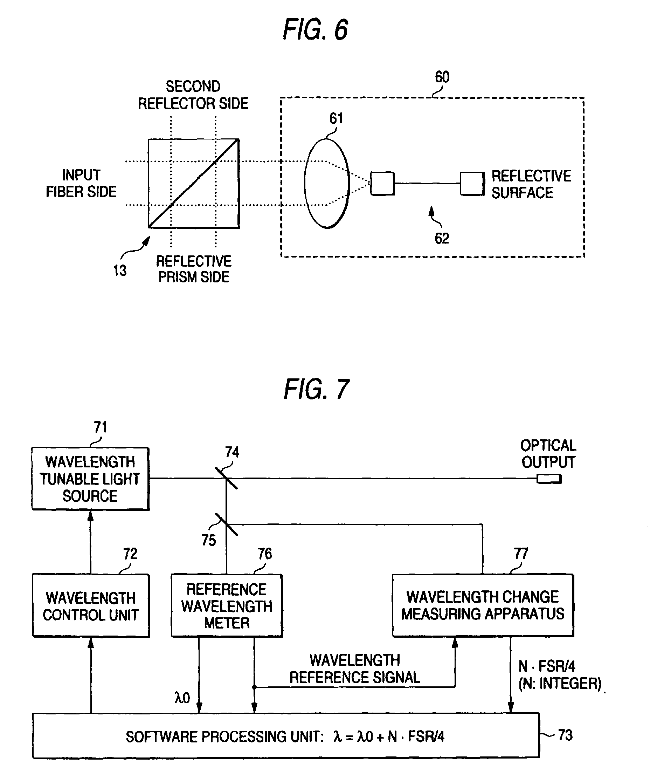

Fig. 6 is a schematic diagram of the first reflector according to the fifth embodiment of the inven-

In the apparatus for measuring wavelength changes according to the fifth embodiment of the invention, the first reflector used in the first to fourth embodiments is replaced by a first reflector 60 which comprises a lens 61 as optical system for condensing collimated light and an optical fiber 62 into which the focused light is launched and which has a reflective coat applied to the end face opposite the entrance face.

According to the fifth embodiment, the optical pathlength difference (L1 - L2) can be increased fairly easily and FSR (free spectral region) is sufficiently reduced to increase the sensitivity for wavelength changes. For example, if the optical fiber 62 is 1 m long, the FSR is shortened to about 0.8 pm.

If the counter 26 in the signal processing section 20 is designed to perform quadrupling in counting the signals from comparators 24 and 25, a wavelength resolution as high as about 0.2 pm can be achieved in the measurement of wavelength changes.

〈Sixth Embodiment〉

In the apparatus for measuring wavelength changes according to the sixth embodiment of the invention, the first reflector used in the firth to fourth embodiments is replaced by a corner cube prism (not shown).

According to the sixth embodiment, the first reflector needs no angular adjustments and the assembling step can be simplified.

〈Seventh Embodiment〉

Fig. 7 is a schematic diagram of a wavelength tunable light source using an apparatus for measuring wavelength changes according to the seventh embodiment of the invention.

The light source unit 71 is a wavelength tunable light source that is capable of mode hop free wavelength tuning in response to signals from a wavelength control unit 72.

The wavelength control unit 72 is supplied with signals from a software processing unit 73 and outputs wavelength control signals to the wavelength tunable light source unit 71 on the basis of the supplied input signals.

The optical output from the wavelength tunable light source unit 71 is fed into beam-splitters 74 and 75 which split the input light into three components, the first component which eventually exits as output light, the second component to be fed into a reference wavelength meter 76 and the third component to be fed into an apparatus 77 for measuring wavelength changes.

The reference wavelength meter 76 which typically uses an absorption line gas cell measures the reference wavelength to output a reference wavelength signal. During measurement of optical intensity with the reference wavelength meter 76 while changing the wavelength of the light source unit 71, there occurs an abrupt change (decrease) in optical intensity if a specified wavelength such as that of the absorption line gas cell is reached. The reference wavelength meter 76 outputs the reference wavelength signal at the wavelength where the abrupt change in optical intensity occurs.

The apparatus 77 measures the change in the wavelength of the incident light produced by splitting with the beam-splitter 75. To state more specifically, the apparatus 77 resets the count data in the counter 26 in response to the reference wavelength signal from the meter 76 and the subsequent changes in wavelength are counted and sent as count data to the software processing unit 73.

On the basis of the signal from the reference wavelength meter 76 and the count data from the apparatus 77 which represents the amount of change in wavelength, the software processing unit 73 calculates the wavelength of the tunable light source unit 71 and sends a control signal to the wavelength control unit 72.

According to the seventh embodiment, the wavelength changes that actually occur in the wavelength tunable light source 71 are measured to control its wavelength and, therefore, unlike the method of wavelength control using an encoder built in a wavelength tuning motor, this embodiment enables precise control of the wavelength of the light source.

As described above, if the changes in the wavelength of a mode-hop-free wavelength tunable light source are measured with the apparatus of the invention, a counter reads signals in high-speed period and this enables real-time measurement of wavelength changes in sharp contrast with the conventional technology using a mechanical moving part. As a further advantage, if the optical pathlength difference (L1 - L2) is increased, the period of FSR is sufficiently shortened to increase the sensitivity for wavelength changes.

In addition, there is no mechanical part that need be moved and, hence, deterioration is least likely to occur over time and high reliability is assured.

If the apparatus of the invention is used to control the wavelength of a wavelength tunable light source, the wavelength changes that actually occur in the wavelength tunable light source are measured (this is not the case of wavelength control using an encoder built in a wavelength tuning motor) and it becomes possible to perform precise control of the wavelength of the light source.

As described on the foregoing pages, the first aspect of the invention relates to an apparatus for measuring wavelength changes using a Michelson interferometer; when the second beam of collimated light produced by splitting with the beam-splitter moves back and forth once, the optical means creates an optical pathlength difference of $\lambda/4$ in one half the optical beam plane; the two beams of collimated light that have been reflected from the first and second reflectors and which have been recombined by the beam-splitter are again split with the reflective prism into two beams in the plane of the optical axis where the optical pathlength difference of of λ/4 has occurred; the two split beams are received by the first and second photo-detectors; and the change in optical intensity from the first and second photo-detectors is counted and subjected to specified processing by the signal processing means. This is how the changes that actually occur to the wavelength of a wavelength tunable light source are measured and, hence, wavelength can be controlled with high precision.

In the signal processing means, a counter reads signals in high-speed period and this enables real-time measurement of wavelength changes. As a further advantage, there is no mechanical part that need be moved and, hence, deterioration is least likely to occur over time and high reliability is assured.

In the apparatus of the second aspect of the invention, a planar second reflector having a step of λ/8 at the center of the optical axis where the collimated light is incident is used as the optical means. Therefore, in addition to the advantages of the first aspect of the invention, there is provided one more advantage in that no additional component need be provided as the optical means and this contributes to avoid the increase in the number of components and complication of the assembling step.

In the apparatus of the third aspect of the invention, the optical means comprises a planar second reflector that reflects the second beam of collimated light obtained by splitting with the beam-splitter and a parallel plane substrate that is inserted between the beam-splitter and the second reflector and which has a step that produces an optical pathlength difference of λ/8 at the center of the optical axis where the collimated light is incident. Therefore, in addition to the advantages of the first aspect of the invention, there are provided two other advantages, i.e., the need to use different types of reflector is eliminated, thus permitting the use of two reflectors of identical type, and to measure different wavelength bands, one only need provide parallel plane substrates having different levels of step and the other optical components may remain the same.

In the apparatus of the fourth aspect of the invention, the optical means comprises a cube beam-splitter having a step that provides an optical pathlength difference of λ/8 at the center of the optical axis of the exit plane from which the second beam of collimated light from the beam-splitter emerges and a planar second reflector. Therefore, in addition to the advantages of the first aspect of the invention, there is provided one more advantage, that is, the need to use different type reflectors is eliminated, thus permitting the use of two reflectors of identical type.

In the apparatus of the fifth aspect of the invention, a cube beam-splitter having a step that provides an optical pathlength difference of λ/8 at the center of the optical axis of the plane of the beam-splitter in which the second beam of collimated light has been split, with a reflective coat being applied to the stepped surface, is used as the optical means. Therefore, in addition to the advantages of the first aspect of the invention, there is provided one more advantage in that since the beam-splitter also serves as the second reflector, only one reflector need be used and both cost reduction and simplified assembling step can be realized.

In the apparatus of the sixth aspect of the invention, the first reflector comprises a lens for condensing collimated light and an optical fiber into which the focusd light is launched and which has a reflective coat applied to the end face opposite the entrance face. Therefore, in addition to the advantages of the first to fifth aspects of the invention, there is provided one more advantage in that the difference between the optical pathlength of the first split beam and that of the second split beam can be increased fairly easily and FSR (free spectral region) is sufficiently reduced to increase the sensitivity for wavelength changes.

In the apparatus of the seventh aspect of the invention, a corner cube prism is used as the first reflector. Therefore, in addition to the advantages of the invention recited in any one of the first to fifth aspects of the invention, there is provided one more advantage in that since the first reflector needs no angular adjustments, the assembling step can be further simplified.

In the wavelength tunable light source of the eighth aspect of the invention, the wavelength changes that actually occur are measured with the apparatus according to any one of the first to seventh aspects of the invention and this enables precise control of the wavelength of the light source.

**Claims**

1.  An apparatus for measuring a change in wavelength using Michelson interferometer optical system, said optical system comprising:

    an optical element with which incident light from an input section is converted to collimated light;
    a beam-splitter into which the collimated light from the optical element is launched to be split into a first beam of collimated light and a second beam of collimated light;
    a first reflector and a second reflector for reflecting the first and second beams of collimated light from the beam-splitter;
    an optical means which, when the second beam of collimated light moves back and forth once, creates an optical pathlength difference of λ/4 in one half the optical beam plane;
    a reflective prism with which the two beams of collimated light that have been reflected from the first and second reflectors and which have been recombined by the beam-splitter are again split into two beams in the plane of the optical axis where the optical pathlength difference of λ/4 has occurred;

a first and a second photo-detector for receiving the light that has been split into two beams by the reflective prism; and

a signal processing means by which the change in optical intensity from the first and second photo-detectors is counted and subjected to specified processing.

2. The apparatus according to claim 1, wherein said optical means is a planar second reflector having a step of λ/8 at the center of the optical axis where the collimated light is incident.

3. The apparatus according to claim 1, wherein said optical means comprises:

a planar second reflector; and
a parallel plane substrate that is inserted between the beam-splitter and the second reflector and which has a step that produces an optical pathlength difference of λ/8 at the center of the optical axis where the collimated light is incident.

4. The apparatus according to claim 1, wherein said optical means comprises:

a cube beam-splitter having a step that provides an optical pathlength difference of λ/8 at the center of the optical axis of the exit plane from which the second beam of collimated light from the beam-splitter emerges; and
a planar second reflector.

5. The apparatus according to claim 1, wherein said optical means comprises:

a cube beam-splitter having a step that provides an optical pathlength difference of λ/8 at the center of the optical axis of the plane of the beam-splitter in which the second beam of collimated light has been split, with a reflective coat being applied to the stepped surface.

6. The apparatus according to claim 1, wherein said first reflector comprises:

optical system for condensing collimated light; and
an optical fiber into which the focusd light is launched and which has a reflective coat applied to the end face opposite the entrance face.

7. The apparatus according to claim 1, wherein said first reflector is a corner cube prism.

8. A wavelength tunable light source having a wavelength tuning mechanism, which has the wavelength controlled on the basis of the wavelength changes measured by the apparatus according to claim 1.

## FIG. 1

## FIG. 2A

$$FSR = \lambda^2 / |\, 2\,(nL_1 - nL_2)\,|$$

## FIG. 2B

# FIG. 3

30

SECOND SPLIT
COLLIMATED LIGHT

35: SECOND
REFLECTOR

$(n-1)/d = \lambda/8$  d  n  31

13

14

FIRST
REFLECTOR

11

12

FIRST SPLIT
COLLIMATED LIGHT

17  FIRST
PHOTO-
DETECTOR

SECOND
PHOTO-
DETECTOR  18

16

WAVELENGTH
CHANGE
AMOUNT

SIGNAL PROCESSING SECTION  20

# FIG. 4

40

SECOND SPLIT
COLLIMATED LIGHT

45: SECOND
REFLECTOR

$(n - 1) / d = \lambda/8$

d    n    43    14

11    FIRST
REFLECTOR

12

FIRST SPLIT
COLLIMATED LIGHT

17    FIRST
PHOTO-
DETECTOR

SECOND
PHOTO-
DETECTOR    18

16

WAVELENGTH
CHANGE
AMOUNT

SIGNAL PROCESSING SECTION    20

## FIG. 5

50

SECOND SPLIT
COLLIMATED LIGHT

REFLECTIVE
SURFACE

$nd = \lambda/8$

d    n

53

14

11

12

FIRST
REFLECTOR

FIRST SPLIT
COLLIAMTED LIGHT

17 — FIRST
PHOTO-
DETECTOR

SECOND
PHOTO-
DETECTOR

— 18

16

WAVELENGTH
CHANGE
AMOUNT

SIGNAL PROCESSING SECTION

— 20

## FIG. 6

## FIG. 7

# FIG. 8

ROTATIONAL DRIVE CIRCUIT — 89

WAVELENGTH DATA ←

SIGNAL PROCESSING SECTION — 88

PHOTO-DETECTOR — 86

EP 1 028 311 A1

## FIG. 9

FIXED
REFLECTOR
94

92

91

98
REFERENCE WAVELENGTH
RIGHT SOURCE

93

95

PARALLEL
MOVEMENT

99

TRANSLATING
MECHANISM

96
PHOTO- DETECTOR
FOR REFERENCE

PHOTO- DETECTOR
FOR MEASUREMENT

WAVELENGTH DATA

101
SIGNAL PROCESSING
SECTION

97

102
TRANSLATIONAL
DRIVE CIRCUIT

## FIG. 10

OPTICAL INTENSITY
AT PHOTO-DETECTORS

LIGHT TO BE MEASURED

REFERENCE LIGHT

MOVEMENT TIME

European Patent Office

Application Number
EP 00 10 2788

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 4 084 907 A (PINARD JACQUES ANDRE ET AL) 18 April 1978 (1978-04-18) * abstract; claim 14; figure 1 * | 1-3,8 | G01J9/02 |
| A | GB 2 270 379 A (MITUTOYO CORP) 9 March 1994 (1994-03-09) * page 9, line 23 - page 9, line 30; figure 3 * | 1 | |
| A | YAU-SHENG CHANG; PIE-YAU CHIEN; MING-WEN CHANG : "Distance and velocity measurements by the use of an orthogonal Michelson interferometer " APPLIED OPTICS., vol. 36, no. 1, 1 January 1997 (1997-01-01), pages 258-265, XP002137516 OPTICAL SOCIETY OF AMERICA,WASHINGTON., US ISSN: 0003-6935 * page 259; figure 1 * | 1-3 | |
| A | GB 2 136 117 A (NICOLET INSTRUMENT CORP) 12 September 1984 (1984-09-12) * page 2, line 90 - page 2, line 108; figure 2 * | 1 | TECHNICAL FIELDS SEARCHED (Int.Cl.7) G01J G01B |
| A | US 3 868 185 A (GENZEL LUDWIG ET AL) 25 February 1975 (1975-02-25) * abstract * | 7 | |
| A | US 4 420 260 A (MARTINELLI MARIO) 13 December 1983 (1983-12-13) * abstract * | 6 | |

The present search report has been drawn up for all claims

| Place of search | Date of completion of the search | Examiner |
|---|---|---|
| THE HAGUE | 12 May 2000 | De Buyzer, H |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 028 311 A1

ANNEX TO THE EUROPEAN SEARCH REPORT
ON EUROPEAN PATENT APPLICATION NO.

EP 00 10 2788

This annex lists the patent family members relating to the patent documents cited in the above-mentioned European search report.
The members are as contained in the European Patent Office EDP file on
The European Patent Office is in no way liable for these particulars which are merely given for the purpose of information.

12-05-2000

| Patent document cited in search report | | Publication date | Patent family member(s) | | Publication date |
|---|---|---|---|---|---|
| US 4084907 | A | 18-04-1978 | FR 2309846 A | | 26-11-1976 |
| | | | DE 2550561 A | | 26-05-1976 |
| GB 2270379 | A | 09-03-1994 | NONE | | |
| GB 2136117 | A | 12-09-1984 | CA 1210608 A | | 02-09-1986 |
| | | | DE 3344545 A | | 06-09-1984 |
| | | | FR 2542084 A | | 07-09-1984 |
| | | | JP 59164926 A | | 18-09-1984 |
| US 3868185 | A | 25-02-1975 | DE 2251080 A | | 02-05-1974 |
| | | | FR 2213491 A | | 02-08-1974 |
| | | | GB 1440135 A | | 23-06-1976 |
| US 4420260 | A | 13-12-1983 | IT 1138312 B | | 17-09-1986 |
| | | | AT 23637 T | | 15-11-1986 |
| | | | DE 3274295 D | | 02-01-1987 |
| | | | EP 0064789 A | | 17-11-1982 |
| | | | JP 57187627 A | | 18-11-1982 |

For more details about this annex : see Official Journal of the European Patent Office, No. 12/82

20